(19) Europäisches Patentamt
European Patent Office
Office européen des brevets

(11) Veröffentlichungsnummer: **0 208 245**
**B1**

(12) # EUROPÄISCHE PATENTSCHRIFT

(45) Veröffentlichungstag der Patentschrift: **05.04.89**

(21) Anmeldenummer: **86108978.7**

(22) Anmeldetag: **02.07.86**

(51) Int. Cl.⁴: **A01N 43/88,** A01N 43/42 // (A01N43/88, 43:42, 37:48),(A01N43/42, 37:48)

(54) **Herbizide und wachstumsregulierende Mittel auf Basis von Chinolinderivaten.**

(30) Priorität: **08.07.85 DE 3524319**

(43) Veröffentlichungstag der Anmeldung: **14.01.87 Patentblatt 87/3**

(45) Bekanntmachung des Hinweises auf die Patenterteilung: **05.04.89 Patentblatt 89/14**

(84) Benannte Vertragsstaaten: **DE FR GB IT**

(56) Entgegenhaltungen:
**EP-A- 0 023 100**
**EP-A- 0 104 389**
**US-A- 4 063 929**

(73) Patentinhaber: **BASF Aktiengesellschaft, Carl-Bosch-Strasse 38, D-6700 Ludwigshafen(DE)**

(72) Erfinder: **Menck, Bernd-Heinrich, Dr., Waldstrasse 65, D-6706 Wachenheim(DE)**
Erfinder: **Wuerzer, Bruno, Dr., Ruedigerstrasse 13, D-6701 Otterstadt(DE)**

**EP 0 208 245 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue synergistische herbizide und wachstumsregulierende Mittel, die Mischungen aus Chinolinderivaten und Diphenylethern und gegebenenfalls aus Benzothiadiazinonen enthalten, und Verfahren zur Bekämpfung unerwünschten Pflanzenwuchses sowie zur Regulierung des Pflanzenwachstums.

Gegenstand der US-A 4 063 929 sind u.a. 5-[2-Chlor-4-(trifluormethyl)phenoxy]-2-nitrobenzoesäure, deren landwirtschaftlich brauchbare Salze sowie die Verwendung dieser Produkte als Herbizide.

Weiterhin wird in der EP-A 3416 5-[2-Chlor-4-(trifluormethyl)phenoxy]-nitro-N-(methylsulfonyl)-benzamid und dessen herbizide Wirksamkeit beschrieben.

Aus der DE-C 1 542 836 ist die Verwendung von 3-Isopropyl-1H-2,1,3-benzothiadiazin-4(3H)-2,2-dioxid als Herbizid bekannt. Weitere herbizid wirksame Benzothiadiazinone, z.B. 1-Cyano-8-chlor-3-isopropyl-1H-2,1,3-benzothiadiazin-4(3H)-on-2,2-dioxid werden in der US-A 4 158 559 beschrieben.

Auch Mischungen aus 5-[2-Chlor-4(trifluormethyl)phenoxy]-2-nitro-N-(methylsulfonyl)-benzamid und 3-Isopropyl-1H-2,1,3-benzothiadiazin-4(3H)-on-2,2-dioxid-natriumsalz sind bekannt (EP-A-23 100). Mischungen aus 3-Isopropyl-1H-2,1,3-benzothiadiazin-4(3H)-on-2,2-dioxid und 5-[2-Chlor-4-(trifluormethyl)phenoxy]-2-nitrobenzoesäure-natriumsalz sind in Res. Report North Central Weed Control Conference Vol. 41, 1984, S. 191 und 320 beschrieben.

Schließlich ist aus der EP-A 60 429 und EP-A 104 389 bekannt, daß sich Chinolinderivate zur Bekämpfung von grasartigen und breitblättrigen unerwünschten Pflanzen in verschiedenen Kulturen eignen. Die Wirkung wird bei Behandlung der Unkräuter dabei sowohl vor als auch nach deren Auflauf erzielt.

Um eine mögliche Verbreiterung des Wirkungsspektrums dieser Chinolinderivate zu erzielen, wurde vorgeschlagen (loc.cit.), sie zusammen mit herbiziden Wirkstoffen anderer Verbindungsklassen auszubringen. Dabei werden als Mischungspartner eine Vielzahl von Wirkstoffen aus allen bekannten Verbindungsklassen aufgezählt, beispielsweise aus der Klasse der Diazine, Benzothiadiazinone (z.B. 3-Isopropyl-1H-2,1,3-benzothiadiazin-4(3H)-on-2,2-dioxid, dessen 1-Cyan-, 8-Chlor-, 8-Fluor- und 8-Methylderivate sowie Salze dieser Verbindungen), 2,6-Dinitroaniline, N-Methylcarbamate, N-Phenylcarbamate, Biscarbamate, Thiolcarbamate, Halogencarbonsäuren, Benzoesäurederivate, Terephthalate, Phenoxyfettsäuren, Triazine, Triazinone, Uracile, 2-Chloracetamid, 2-Chloracetanilide, Anilide, Benzonitrile, Diphenylether (z.B. 2-Chlor-4-trifluormethylphenyl-3'-carboxy-4'-nitrophenylether und dessen Salze), Dinitrophenole, Harnstoffe, Dipyridiniumverbindungen, Cyclohexan-1,3-dione, Benzoxazinone oder der Benzofuranderivate. Eine spezielle Lehre, bestimmte Mischungen mit besonderen Eigenschaften herzustellen, ist dieser Aufzählung nicht zu entnehmen.

Es wurden nun neue herbizide und wachstumsregulierende Mittel, enthaltend eine Mischung aus einem Chinolinderivat der Formel I

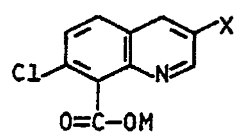

(I)

in der
X für Halogen, Methyl, Ethyl oder $CF_3$ steht, worin M Wasserstoff, ein Metall der Gruppe 1A oder 2A des Periodensystems, $C_1$–$C_8$-Alkyl oder einen gegebenenfalls durch Halogen, Nitro, $C_1$–$C_4$-Alkyl oder Trihalogenmethyl substituierten Phenylrest bedeutet
und einem Diphenylether der Formel II

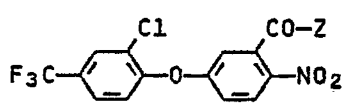

(II)

in der Z für einen Methylsulfonylaminorest oder die Gruppe OM steht, wobei M ein Metall der Gruppe 1A oder 2A des Periodensystems oder ein Ammoniumion wie angegeben auf Seite 3, bedeutet, und gegebenenfalls einem Benzothiadiazinonderivat der Formel III

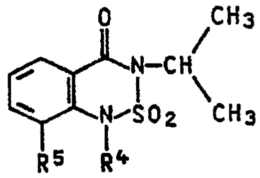

(III)

in der $R^4$ Wasserstoff oder Cyano, $R^5$ Wasserstoff, $C_1$–$C_4$-Alkyl oder Halogen bedeuten, oder einem Salz dieser Verbindung, gefunden, die eine nachhaltige synergistische Wirkung bei der Bekämpfung von unerwünschten Pflanzen zeigen sowie überraschende wachstumsregulierende Eigenschaften besitzen.

Beispielhaft seien folgende besonders bevorzugte Chinolinderivate genannt:
3,7-Dichlor-8-carboxychinolin, 3-Methyl-7-chlor-8-carboxychinolin, 3-Ethyl-7-chlor-8-carboxychinolin sowie deren Salze, nämlich das 2-Hydroxyethyl-ammoniumsalz, das Bis-(2-hydroxyethyl)-ammoniumsalz, das Dimethylammoniumsalz, das Triethanolammoniumsalz sowie das Kupfer- und das Natriumsalz und ferner deren Methyl-, Ethyl-, Propyl- und Butylester, z.B. 3,7-Dichlor-8-methoxycarbonylchinolin, 3,7-Dichlor-8-ethoxycarbonylchinolin, 3-Methyl-7-chlor-8-(n-propoxycarbonyl)chinolin, 3-Ethyl-7-chlor-8-(tert.-butoxycarbonyl)chinolin.

Herbizide Mittel, die als Chinolinderivat der Formel I 3,7-Dichlor-8-carboxychinolin oder 3-Methyl-7-chlor-8-carboxychinolin enthalten, seien besonders hervorgehoben.

Bevorzugte Diphenylether der Formel II sind 5-[2-Chlor-4-(trifluormethyl)phenoxy]-2-nitro-N-(methylsulfonyl)benzamid sowie das Natriumsalz der 5-[2-Chlor-4-(trifluormethyl)phenoxy]-2-nitrobenzoesäure.

Für den Fall, daß die erfindungsgemäßen Mittel auch Benzothiadiazinonderivate der Formel III enthalten, kommen neben diesen Stoffen auch deren landwirtschaftlich brauchbaren Salze, z.B. das unsubstituierte Ammoniumsalz, substituierte Ammoniumsalze, wie das Dimethylammonium- oder Diethanolammoniumsalz, oder Metallsalze, wie Alkalimetallsalze (beispielsweise Natrium oder Kalium) in Betracht.

Bevorzugte Benzothiadiazinondioxide der Formel III sind 3-Isopropyl-1H-2,1,3-benzothiadiazin-4(3H)-on-2,2-dioxid, 3-Isopropyl-8-chlor-1H-2,1,3-benzothiadiazin-4(3H)-on-2,2-dioxid, 3-Isopropyl-8-fluor-1H-2,1,3-benzothiadiazin-4(3H)-on-2,2-dioxid, 3-Isopropyl-8-methyl-1H-2,1,3-benzothiadiazin-4(3H)-on-2,2-dioxid oder deren oben genannte Salze, weiterhin 1-Cyano-8-chlor-3-isopropyl-1H-2,1,3-benzothiadiazin-4(3H)-on-2,2-dioxid, 1-Cyano-8-fluor-3-isopropyl-1H-2,1,3-benzothiadiazin-4(3H)-on-2,2-dioxid, 1-Cyano-8-methyl-3-isopropyl-1H-2,1,3-benzothiadiazin-4(3H)-on-2,2-dioxid sowie 1-Cyano-3-isopropyl-1H-2,1,3-benzothiadiazin-4(3H)-on-2,2-dioxid.

3-Isopropyl-1H-2,1,3-benzothiadiazin-4(3H)-on-2,2-dioxid sowie dessen Natriumsalz seien besonders hervorgehoben.

Die neuen Mittel enthalten eine Mischung aus einem Chinolinderivat der Formel I und einem Diphenylether der Formel II. Gegebenenfalls enthalten sie auch eine Mischung, die zusätzlich noch ein Benzothiadiazinonderivat der Formel III aufweist.

In den erfindungsgemäßen Mitteln kann das Mischungsverhältnis der einzelnen Mischungspartner in einem weiten Bereich schwanken.

Für den Fall, daß es sich um eine Mischung aus einem Chinolinderivat und einem Diphenylether handelt, liegt das Mischungsverhältnis (jeweils bezogen auf Gewichtsteile) bei 1:1 bis 1:20, vorzugsweise 1:2 bis 1:10.

Liegt eine Mischung aus einem Chinolinderivat, einem Diphenylether und zusätzlich einem Benzothiadiazinonderivat vor, so kann das Mischungsverhältnis (jeweils bezogen auf Gewichtsteile) 1:0,5:0,5 bis 1:5:15, vorzugsweise 1:2:4 bis 1:2:10 betragen.

Die erforderlichen Aufwandmengen an reiner Wirkstoffmischung, d.h. ohne Formulierungshilfsmittel, ist abhängig von der Zusammensetzung des Pflanzenbestandes, vom Entwicklungsstadium der Pflanzen, von den klimatischen Verhältnissen am Einsatzort sowie von der Anwendungstechnik. Im allgemeinen betragen die Aufwandmengen 0,25 bis 5 kg, vorzugsweise 0,3 bis 1,75 kg Wirkstoffmischung/ha.

Als Kulturen, in denen die erfindungsgemäßen herbiziden und wachstumsregulierenden Mittel über das Blatt angewandt werden können, kommen im wesentlichen diejenigen in Betracht, in denen auch die Einzelwirkstoffe der Mischung eingesetzt werden können, beispielsweise Soja, Reis und Getreide.

Von Bedeutung ist die Ausbringungstechnik. Werden die neuen Mittel zum Zwecke der Bekämpfung unerwünschter Pflanzen bei Kulturpflanzen, die eine ungenügende Verträglichkeit aufweisen, eingesetzt, so wird nach speziellen Methoden die Ausbringung so gelenkt, daß die Blätter der Kulturpflanzen möglichst wenig mit den Mitteln in Berührung kommen, während die dazwischen oder darunter wachsenden unerwünschten Pflanzen oder die freie Bodenfläche von den Mitteln getroffen werden (Unterblattspritzung, post-directed, lay-by).

Die erfindungsgemäßen Mittel werden beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet. Die Anwendungsformen

richten sich ganz nach den Verwendungszwecken; sie sollten in jedem Fall möglichst die feinste Verteilung der erfindungsgemäßen Wirkstoffmischungen gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie N,N-Dimethylformamid, Dimethylsulfoxid, N-Methylpyrrolidon oder Wasser, in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salzen von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenolpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Die Formulierungen enthalten zwischen 0,1 und 95, vorzugsweise zwischen 0,5 und 90 Gew.-% Wirkstoffmischung. Sie können nach an sich bekannten Methoden durchgeführt werden.

Die erfindungsgemäßen herbiziden und wachstumsregulierenden Mittel können zusätzlich mit zahlreichen Vertretern weiterer herbizider oder wachstumsregulierender Wirkstoffgruppen gemischt und gemeinsam ausgebracht werden.

Außerdem ist es nützlich, die erfindungsgemäßen Mischungen auch noch mit weiteren Pflanzenschutzmitteln gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralstofflösungen, welche zur Behebung von Ernährungs- und Spurenelementmängeln eingesetzt werden.

Die biologische Wirkung der erfindungsgemäßen Mittel wird durch Gewächshaus- und Freilandversuche belegt.

Im Gewächshaus dienen Plastikblumentöpfe mit 300 $cm^3$ Inhalt als Kulturgefäße. Das Substrat besteht aus lehmigem Sand mit etwa 3,0% Humus. Bei Soja reichert man dieses mit Torfmull (peat) etwas an, um einen besseren Aufgang und Entwicklung der Pflanzen zu gewährleisten. Die Samen der Testpflanzen werden nach Arten getrennt flach eingesät. Dann werden diese je nach Wuchsform bis zu einer Höhe von 3 bis 15 cm angezogen und mit den erfindungsgemäßen Mitteln behandelt. Die Wirkstoffe werden einzeln und in Mischung in Wasser als Verteilungsmedium suspendiert bzw. emulgiert oder gelöst und mittels fein verteilender Düsen aufgespritzt. Für die Versuche werden entweder direkt gesäte und in den gleichen Gefäßen aufgewachsene Pflanzen ausgewählt, oder sie werden erst als Keimpflanzen getrennt angezogen und einige Tage vor der Behandlung in die Versuchsgefäße verpflanzt. Die Aufwandmengen für die Nachauflaufbehandlung variieren zwischen 0,06 und 1,0 kg Wirkstoff/ha.

Die Versuchsgefäße werden im Gewächshaus aufgestellt, wobei für wärmeliebende Arten wärmere Bereiche (Temperatur: 20 bis 35°C) und für solche gemäßigter Klimate Temperaturen von 10 bis 25°C bevorzugt werden. Die Versuchsperiode erstreckt sich über 3 bis 6 Wochen. Während dieser Zeit werden die Pflanzen gepflegt und ihre Reaktion auf die einzelnen Behandlungen wird ausgewertet. Die herbizide Wirkung wird nach einer Skale von 0 bis 100 bewertet. Dabei bedeutet 0 keine Schädigung oder normaler Ablauf und 100 kein Aufgang der Pflanzen bzw. die völlige Zerstörung zumindest der oberirdischen Teile. Zur Feststellung des Längenwachstums von Sojapflanzen (wachstumsregulatorische Wirkung) wurde deren Höhe in cm gemessen und daraus die prozentuale Einkürzung errechnet.

Die in den Gewächshausversuchen verwendeten Pflanzen setzten sich aus folgenden Arten zusammen: Glycine max (Sojabohnen), Ipomoea spp. (Prunkwindearten), Sida spinosa.

Bei den Freilandversuchen handelt es sich um Kleinparzellenversuche mit Soja (Glycine max) als Ziel- und Beispielskultur. Begleitende unerwünschte Pflanzen sind: Ipomoea spp. (Prunkwindearten), Richardia brasiliensis, Sida spp.

Wie bei den Gewächshausversuchen werden auch bei den Freilandversuchen die Wirkstoffe in Wasser als Träger- und Verteilermedium ausgebracht. Dies geschieht von Hand mit Hilfe von Spritzgeräten oder mittels motorisierten Kleinparzellenspritzgeräten. Die Aufwandmengen reichen von 0,05 bis 1,0 kg Wirkstoff/ha.

Die Applikation erfolgt ebenfalls im Nachauflaufverfahren. Der Beobachtungszeitraum erstreckt sich über mehrere Wochen. Die herbizide Wirkung wird auch hier nach der obengenannten Skala von 0 bis 100 bewertet.

Beispielhaft wurden folgende Wirkstoffe sowie Mischungen aus diesen Wirkstoffen verwendet:
3,7-Dichlor-8-carboxychinolin (Wirkstoff A)
3-Methyl-7-chlor-8-carboxychinolin (Wirkstoff B)
5-[2-Chlor-4-(trifluormethyl)phenoxy]-2-nitrobenzoesäure-natriumsalz (Wirkstoff C)
5-[2-Chlor-4-(trifluormethyl)phenoxy]-2-nitro-N-(methylsulfonyl)benzamid (Wirkstoff D)
3-Isopropyl-1H-2,1,3-benzothiadiazin-4(3H)-on-2,2-dioxid-natriumsalz (Wirkstoff E)

Die Ergebnisse in den folgenden Tabellen 1 bis 5 zeigen die starke überadditive herbizide und wachstumsregulierende Wirkung der erfindungsgemäßen Mischungen.

**Tabelle 1**

**Synergistische herbizide Wirkung von Wirkstoff A in Mischung mit Wirkstoff D bei Nachauflaufanwendung an Sida spp. im Gewächshaus**

| Wirkstoff | kg/ha a. S. | Testpflanzen und Schädigung % | |
|---|---|---|---|
| | | Glycine max. | Sida spinosa |
| A | 0,05 | 0 | 40 |
| | 0,15 | 0 | 50 |
| D | 0,25 | 0 | 10 |
| A + D | 0,05 + 0,25 | 7 | 97 |

Die Mischung aus den Wirkstoffen A und D zeigt eine synergistische herbizide Wirkung gegenüber dem breitblättrigen Beispielsunkraut Sida spinosa ohne an Sojapflanzen nennenswerte Schädigungen zu verursachen.

**Tabelle 2**

**Synergistische herbizide Wirkung von Wirkstoff A in Mischung mit Wirkstoff C bei Nachauflaufanwendung im Freiland**

| Wirkstoff | kg/ha a. S. | Testpflanzen und Schädigung % | |
|---|---|---|---|
| | | Ipomoea spp. | Sida spinosa |
| A | 0,05 | 7 | 40 |
| | 0,15 | 27 | 50 |
| C | 0,25 | 10 | 13 |
| A + C | 0,05 + 0,25 | 95 | 100 |

Ebenso zeigt die Mischung aus den Wirkstoffen A und D im Freilandversuch eine synergistische herbizide Wirkung gegen unerwünschte Beispielspflanzen wie Ipomoea spp. und Sida spp.

**Tabelle 3**

**Synergistische selektive herbizide Wirkung einer Mischung der Wirkstoffe B, C und E bei Nachauflaufanwendung im Gewächshaus**

| Wirkstoff | kg/ha a. S. | Testpflanzen und Schädigung % | |
|---|---|---|---|
| | | Glycine max. | Ipomoea spp. |
| B | 0,125 | 2 | 30 |
| C | 0,06 | 2 | 55 |
| E | 0,125 | 0 | 10 |
| B + C + E | 0,15 + 0,06 + 0,125 | 8 | 78 |

Während in einem Gewächshausversuch die Einzelwirkstoffe gegen Ipomoea spp. in den eingesetzten Dosierungen eine vergleichsweise schwache Wirkung zeigen, erzielt die Mischung aus den Wirkstoffen B, C und E eine überraschende überadditive Wirkung; wiederum mit nur unbedeutenden Schäden an der Kulturpflanze.

Tabelle 4

| Synergistische und stabilisierende Wirkung einer Mischung der Wirkstoffe A, D und E bei Nachauflaufanwendung im Freiland | | | |
|---|---|---|---|
| Wirkstoff | kg/ha a. S. | Testpflanzen und Schädigung % | |
| | | 1. Bonit. | 2. Bonit. |
| A | 0,05 | 5 | 25 |
| | 0,1 | 10 | 20 |
| | 0,15 | 3 | 23 |
| E | 0,75 | 40 | 43 |
| D | 0,25 | 77 | 52 |
| D + E | 0,24 + 0,72 | 82 | 74 |
| A + D + E | 0,05 + 0,24 + 0,72 | 85 | 88 |

Der Zusatz kleiner Mengen (0,05 kg/ha) an Wirkstoff A zu einer Mischung der Wirkstoffe D und E führt in überadditiver Weise zu einer Verlängerung der Wirkungsdauer (2. Bonitierung), während die Aktivität ohne den Zusatz von Wirkstoff A nachläßt. Wirkstoff A allein hat nur eine geringe Aktivität gegen das Beispielsunkraut Richardia brasiliensis.

Tabelle 5

| Wachstumsregulierende Wirkung (einkürzend und stengelfestigend) einer Mischung der herbiziden Wirkstoffe A, C und E bei Nachauflaufanwendung im Gewächshaus | | | |
|---|---|---|---|
| Verbindung | kg/ha a. S. | Sojapflanzen | |
| | | Höhe (cm) | Einkürzung (%) |
| Unbehandelte Kontrolle | – | 32 | 0 |
| A | 0,06 | 27 | 16 |
| | 0,125 | 25 | 22 |
| | 0,25 | 24 | 25 |
| | 0,5 | 23 | 28 |
| C | 0,06 | 30 | 6 |
| | 0,125 | 32 | 0 |
| | 0,25 | 31 | 3 |
| | 0,5 | 30 | 6 |
| E | 0,125 | 32 | 0 |
| | 0,25 | 32 | 0 |
| | 0,5 | 32 | 0 |
| | 1,0 | 31 | 3 |
| A + C + E | 0,03 + 0,06 + 0,125 | 23 | 28 |
| | 0,06 + 0,25 + 0,25 | 24 | 25 |
| | 0,125 + 0,25 + 0,5 | 24 | 25 |

Wirkstoff A reduziert in Abhängigkeit von der Aufwandmenge bei Nachauflaufanwendung im Gewächshaus das Längenwachstum von Sojapflanzen. Die Pflanzen werden kürzer und steifer. Überraschend ist dabei die Tatsache, daß diese in bioregulatorischem Sinne erwünschte Einkürzung und Festigung der Stengel über alle angebotenen Aufwandmengen des Wirkstoffs A, in Mischung mit den Wirkstoffen C und E, gleich stark bleibt und auch bei der niedrigsten Menge (0,03 kg/ha) an A ebenso vorteilhaft ausgeprägt ist, wie wenn Wirkstoff A in größeren Mengen allein angewandt wird.

**Patentansprüche**

1. Herbizide und wachstumsregulierendes Mittel, enthaltend ein Chinolinderivat der Formel I

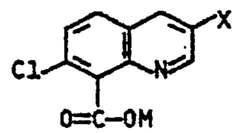

(I),

in der
X für Halogen, Methyl, Ethyl oder $CF_3$ steht, worin M Wasserstoff, ein Metall der Gruppe 1A oder 2A des Periodensystems, $C_1$–$C_8$-Alkyl oder einen gegebenenfalls durch Halogen, Nitro, $C_1$–$C_4$-Alkyl oder Trihalogenmethyl substituierten Phenylrest bedeutet,
und einen Diphenylether der Formel II

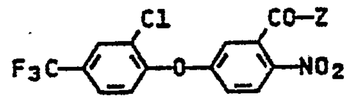

(II),

in der Z für einen Methylsulfonylaminorest oder die Gruppe OM steht, wobei M ein Metallion der Gruppe 1A oder 2A des Periodensystems oder das 2-Hydroxyethyl-, Bis-(2-hydroxyethyl)-, Dimethyl- oder Triethanol-ammoniumion bedeutet jeweils in einer solchen Menge, daß die Mischung eine synergistische Wirkung aufweist.

2. Mittel nach Anspruch 1, enthaltend zusätzlich ein Benzothiadiazinonderivat der Formel III

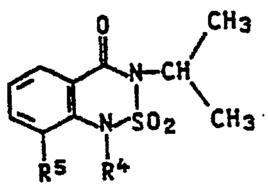

(III),

in der $R^4$ Wasserstoff oder Cyano, $R^5$ Wasserstoff, $C_1$–$C_4$-Alkyl oder Halogen bedeuten, oder ein Salz dieser Verbindung, in einer solchen Menge, daß die Mischung wiederum eine synergistische Wirkung aufweist.

3. Mittel nach Anspruch 1, dadurch gekennzeichnet, daß das Mischungsverhältnis Chinolinderivat zu Diphenylether 1:1 bis 1:20 Gewichtsteile beträgt.

4. Mittel nach Anspruch 1, dadurch gekennzeichnet, daß das Mischungsverhältnis Chinolinderivat zu Diphenylether 1:2 bis 1:10 beträgt.

5. Mittel nach Anspruch 2, dadurch gekennzeichnet, daß das Mischungsverhältnis Chinolinderivat zu Diphenylether zu Benzothiadiazinonderviat 1:0,5:0,5 bis 1:5:15 beträgt.

6. Mittel nach Anspruch 2, dadurch gekennzeichnet, daß das Mischungsverhältnis Chinolinderviat zu Diphenylether zu Benzothiadiazinonderviat 1:0,2:2, bis 1:0,5:5 beträgt.

7. Verfahren zur Bekämpfung unerwünschten Pflanzenwuchses, dadurch gekennzeichnet, daß man die unerwünschten Pflanzen oder die von unerwünschten Pflanzen freizuhaltende Fläche mit einem Mittel nach einem der Ansprüche 1 bis 6 behandelt.

8. Verfahren zur Regulierung des Pflanzenwachstums, dadurch gekennzeichnet, daß man ein Mittel nach einem der Ansprüche 1 bis 6 auf Pflanzen oder deren Lebensraum einwirken läßt.

**Revendications**

1. Agent herbicide et régulateur de croissance, contenant un dérivé de quinoléine de formule I

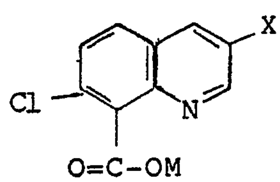

I,

dans laquelle

X représente halogène, méthyle, éthyle ou $CF_3$ et où M signifie hydrogène, un métal du groupe 1A ou 2A du système périodique, alkyle en $C_1$–$C_8$ ou un reste phényle éventuellement substitué par halogène, nitro, alkyle en $C_1$–$C_4$ ou trihalogènométhyle, et un éther diphénylique de formule II

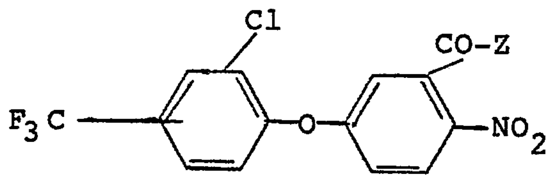

(II),

dans laquelle Z est mis pour un reste méthylsulfonylamino ou le groupe OM, M représentant un ion métal de groupe 1A ou 2A du système périodique ou l'ion 2-hydroxyéthyl-, bis-(2-hydroxyéthyl)-, diméthyl- ou triéthanol-ammonium, chacun en quantité telle que le mélange présente une action synergétique.

2. Agent selon la revendication 1, contenant additionnellement un dérivé de benzothiadiazinone de formule III

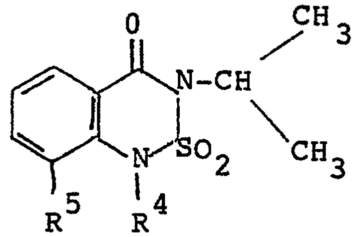

(III)

dans laquelle $R^4$ représente hydrogène ou cyano, $R^5$, hydrogène, alkyle en $C_1$–$C_4$ ou halogène, ou un sel de ces composés, en quantité telle que le mélange présente à nouveau un effet synergétique.

3. Agent selon la revendication 1, caractérisé par le fait que le rapport de mélange du dérivé de quinoléine à l'éther diphénylique est 1/1 à 1/20 parties en poids.

4. Agent selon la revendication 1, caractérisé par le fait que le rapport de mélange du dérivé de quinoléine à l'éther diphénylique est 1/2 à 1/10.

5. Agent selon la revendication 2, caractérisé par le fait que les rapports de mélange du dérivé de quinoléine à l'éthyldiphénylique et au dérivé de benzothiadiazinone sont 1/0,5/0,5 à 1/5/15.

6. Agent selon la revendication 2, caractérisé par le fait que les rapports de mélange du dérivé de quinoléine à l'éthdiphénylique et au dérivé de benzothiadiazinone sont 1/0,2/2 à 1/0,5/5.

7. Procédé pour lutter contre la croissance des plantes indésirables, caractérisé par le fait que l'on traite les plantes indésirables ou les surfaces à maintenir exemptes de plantes indésirables avec un agent selon l'une des revendications 1 à 6.

8. Procédé de régulation de la croissance des plantes, caractérisé par le fait que l'on fait agir sur les plantes ou leur biotope un agent selon l'une des revendications 1 à 6.

## Claims

1. A herbicidal and growth-regulating agent containing a quinoline derivative of the formula I

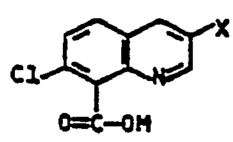

(I)

where X is halogen, methyl, ethyl or $CF_3$ and M is hydrogen, a metal of the group 1A or 2A of the Periodic Table or $C_1$–$C_8$-alkyl or is phenyl which is unsubstituted or substituted by halogen, nitro, $C_1$–$C_4$-alkyl or trihalomethyl, and a diphenyl ether of the formula II

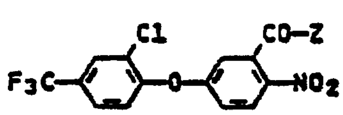

(II)

where Z is methylsulfonylamino or a group OM, where M is a metal ion of the group 1A or 2A of the Periodic Table or a 2-hydroxyethyl-, bis(2-hydroxyethyl)-, dimethyl- or triethanolammonium ion, in each case in such an amount that the mixture has a synergistic effect.

2. An agent as claimed in claim 1 additionally containing a benzothiadiazinone derivative of the formula III

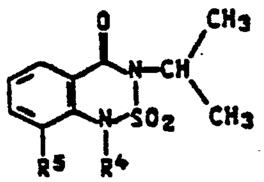

(III)

where $R^4$ is hydrogen or cyano and $R^5$ is hydrogen, $C_1$–$C_4$-alkyl or halogen, or a salt thereof, in such an amount that the mixture again has a synergistic effect.

3. An agent as claimed in claim 1, wherein the weight ratio of quinoline derivative to diphenyl ether is from 1:1 to 1:20.

4. An agent as claimed in claim 1, wherein the weight ratio of quinoline derivative to diphenyl ether is from 1:2 to 1:10.

5. An agent as claimed in claim 2, wherein the weight ratio of quinoline derivative to diphenyl ether to benzothiadiazinone derivative is from 1:0.5:0.5 to 1:5:15.

6. An agent as claimed in claim 2, wherein the weight ratio of quinoline derivative to diphenyl ether to benzothiadiazinone derivative is from 1:0.2:2 to 1:0.5:5.

7. A process for controlling undesirable plant growth, wherein the undesirable plants or the areas to be kept free from undesirable plants are treated with an agent as claimed in any of claims 1 to 6.

8. A process for regulating plant growth, wherein an agent as claimed in any of claims 1 to 6 is allowed to act on plants or on their biotope.